# EUROPEAN PATENT SPECIFICATION

(11) **EP 1 723 028 B1**
(45) Date of publication and mention of the grant of the patent: **07.11.2007**
(21) Application number: 05711161.9
(22) Date of filing: 02.03.2005
(51) Int. Cl.: B62J 1/00

(54) **BICYCLE SEAT**
FAHRRADSITZ
SELLE DE BICYCLETTE

(30) Priority: 03.03.2004 SE 0400526
(43) Date of publication of application: 22.11.2006
(73) Proprietor: Jansch, Mikael, 114 30 Stockholm (SE)
(72) Inventor: Jansch, Mikael, 114 30 Stockholm (SE)
(74) Representative: Billberg, Hans
(86) International application number: PCT/SE2005/000303
(87) International publication number: WO 2005/085051

(56) References cited:
- DE-U1- 20 311 739
- US-A- 4 387 925
- US-A- 4 877 286
- US-A- 5 352 016

## Description

The present invention relates to a bicycle saddle consisting of two separated support portions, each one for supporting one of the bicycle rider's seat bones, (upper femur), the two support portions being mounted on a joint bar, which is arranged perpendicular to the central plane of the bicycle, whereby each one of the support portions is adjustably fixable mounted on said bar.

Bicycle seats of this kind are known from e.g. US 4 387 925 and WO 00/09386.

The object of the present invention is to reach to such a design of the bicycle seat that the support portions of the seat will follow the movement of the seat bones when the rider's thigh bones move up and down, that is to say when the rider pedals his bicycle. The movement of the seat bone is three-dimensional, thus forward in the direction of the movement of the bicycle, sideways and downwards. The specific object of the present invention in relation to the known art is to design a bicycle seat which is very comfortable and includes as few movable parts as possible and is adjustable to the bodily constructional part of the rider.

These objects have been solved by the features of claim 1.

An embodiment of the invention will be described in the following with reference to enclosed drawings.
Fig. 1 is a perspective view of the bicycle seat seen from above from the front.
Fig. 2 is a perspective view of the bicycle seat seen from below from behind.

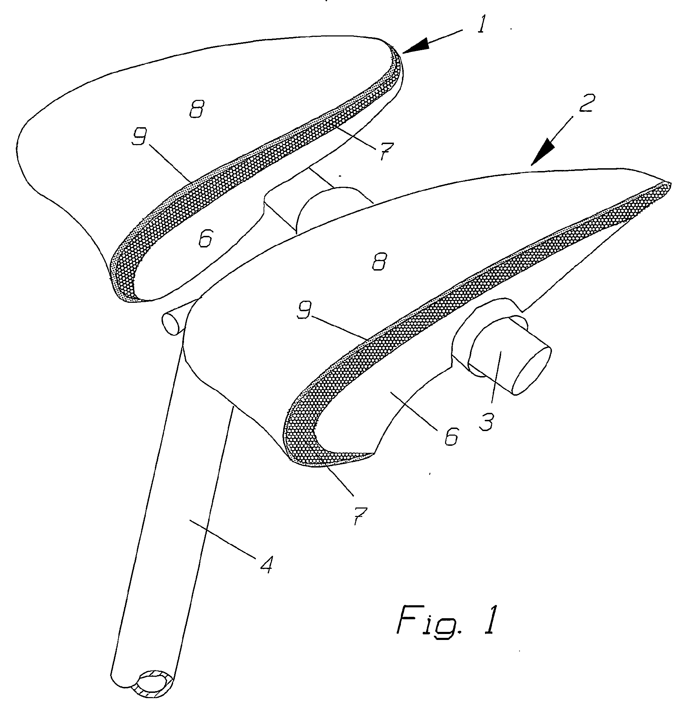

With reference to fig. 1 it is seen that the bicycle seat consists of two support portions 1 and 2, which are arranged on a transversal mounting bar 3, which on its part is supported by a pool 4, which forms a part of the bicycle frame. The two support portions 1 and 2 can be displaced sideways on the bar 3 in relation to each other by being mounted each on a separate socket, which is slidable and rotatable on the bar and can be fastened by a handle 5. That means that the inclination of the support portions in relation to the horizontal plane can be adjusted and fixed by the handle 5. The two support portions 1 and 2 shall be fixed in relation to the bar 3 when the bicycle seat is used meaning that the two support portions shall not be able to tip or being displaced sideways. The bar 3 can be mounted to the pool 4 in different ways known per se and does therefore not form a part of the invention.

It can further be seen from fig. 1 that the surface form of the support portions is such that they are wider at the forward edge than at the back edge. Further, it can be seen that the forward edge is round in order to give good comfort.

The advantage of the invention is now that each one of the support portions will meet and follow the movement of the seat bone without tipping or moving in some other way. Each of the support portions is therefore designed according to the following. The support portions consist mainly of three super imposed layers. The undermost one of the layers is a bottom plate 6, which can be fixed non turnable on the mounting bar 3, that is to say the bottom plate can not tip forward or backwards when fixed. The bottom plate 6 is suitably made from stiff sheet-metal. A second layer in the form of a cushion 7 is fastened to the bottom plate 6, the cushion being elastic in all directions. The elasticity of the cushion 7 shall be such that it is never totally compressed when being loaded by the rider but shall follow the movement of the rider's seat bone, which movement thus is as well known downwards and somewhat sideways, which taken together obliquely downwards and sideways. This movement is largest at the forward end of the support portion. The thickness of the cushion in this area is previously about 10 cm and the hardness is between 5-70 Shore A. As can be seen from fig. 1 the thickness of the cushion is decreasing in the backward direction.

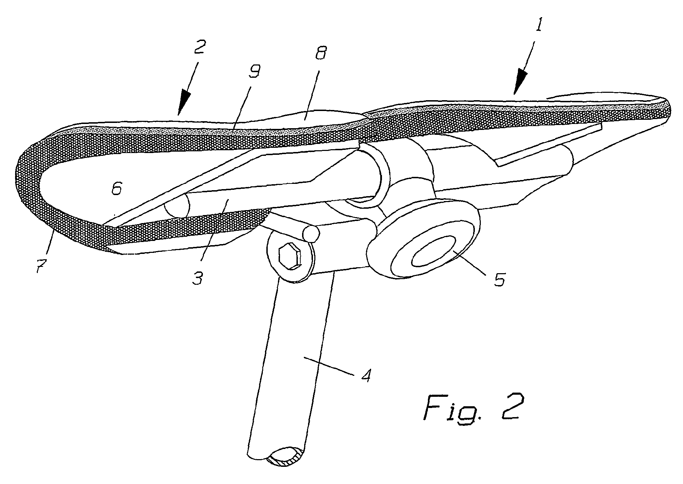

A third layer 8 is laid upon the cushion, which layer 8 is stiff in all directions in its plane. However, it should be observed that fig. 1 and 2 show an intermediate layer 9 in the form of foamed plastic but this layer is not necessary in order to achieve the desirable effect but is something which may improve the comfort. It should be noted that the three layers, the bottom plate 6, the cushion 7 and the upper layer 8 are united with each other via meeting surfaces by using some sort of adhesive means. The layers should not be able to slide in relation to each other.

Within the scope of the invention there are other embodiments than the above described and this concerns specifically the bottom plate and the upper layer 8. The bottom layer shall be stiff and thus suitably formed from metal. The uppermost layer 8 can be of woven fabric, leather or even thin metal plate. The elasticity of the cushion can be varied according to the rider's weight but should be so dimensioned that it can stand the weight of the person without being completely compressed when the rider pedals the bicycle.

## Claims

1. Bicycle seat including two separated support portions each one for supporting one of the bicycle rider's upper seat bone, the two support portions being mounted on a joint bar, which is arranged perpendicular to the central plant of the bicycle, whereby each one of the support portions is adjustably fixable mounted on said **characterized in that** the support portions bar, consist of at least three layers (6, 7, 8) which are secured to each other by means of the meeting surfaces, undermost one (6) of the layers being nonflexible and mounted to the bar and the layer (7) placed upon said nonflexible layer being a cushion, which is elastic in all directions and the uppermost layer (8) being rigid in all directions in its plane, whereby the thickness of the cushion layer (7) is increasing in the direction towards the front edge of the support portion and the elasticity is such that the surface pressure from the rider's seat bone caused by the up and down movement of rider's legs is taken up by the cushion layer without the cushion layer loses its elasticity.

2. Bicycle seat according to claim 1, **characterized in that** the two support portions can be fixed on the mounting bar (3) with different mutual distances.

3. Bicycle seat according to claim 1, **characterized in that** the upper layer is made from leather.

4. Bicycle seat according to claim 1, **characterized in that** the upper layer is formed from sheet metal.

5. Bicycle seat according to claim 1, **characterized in that** the cushion forming the middle layer has a thickness of at least 10 mm and a hardness of 5-70 Shore A.

6. Bicycle seat according to any of the preceding claims, **characterized in that** the support portions are wider at the forward end than at the rear end and that the forward edge is round by that the forward end of the cushion is round.

7. Bicycle seat according to any of the preceding claims, **characterized in that** a foam plastic layer is arranged between the uppermost layer and the cushion whereby the upper layer consists of a woven fabric.

## Patentansprüche

1. Fahrradsitz, der zwei getrennte Trägerteile aufweist, jedes zum Unterstützen eines der oberen Sitzbeine des Fahrradfahrers, wobei die beiden Trägerteile auf einer Verbindungsstange montiert sind, die senkrecht zu der Mittelebene des Fahrrads angeordnet ist, wobei jedes der Trägerteile einstellbar fixierbar auf der Stange montiert ist, **dadurch gekennzeichnet, dass** die Trägerteile aus mindestens drei Schichten (6, 7, 8) bestehen, die aneinander befestigt sind mit Hilfe von sich treffenden Flächen, wobei die unterste (6) der Schichten nicht flexibel und an der Stange montiert ist und die Schicht (7), die auf der nicht flexiblen Schicht angeordnet ist, ein Kissen ist, das elastisch in alle Richtungen ist, und die oberste Schicht (8) steif in alle Richtungen in ihrer Ebene ist, wobei die Dicke der Kissenschicht (7) in Richtung auf die Vorderkante des Trägerteils anwächst und die Elastizität so ist, dass der Flächendruck vom Sitzbein des Fahrers, der durch die Auf- und Abbewegung der Beine des Fahrers verursacht wird, durch die Kissenschicht aufgenommen wird, ohne dass die Kissenschicht ihre Elastizität verliert.

2. Fahrradsitz nach Anspruch 1, **dadurch gekennzeichnet, dass** die beiden Trägerteile auf der Montagestange (3) mit unterschiedlichen gegenseitigen Abständen fixiert werden können.

3. Fahrradsitz nach Anspruch 1, **dadurch gekennzeichnet, dass** die obere Schicht aus Leder gebildet ist.

4. Fahrradsitz nach Anspruch 1, **dadurch gekennzeichnet, dass** die obere Schicht aus Blech gebildet ist.

5. Fahrradsitz nach Anspruch 1, **dadurch gekennzeichnet, dass** das Kissen, das die mittlere Schicht bildet, eine Dicke von mindestens 10 mm und eine Härte von 5-70 Shore A hat.

6. Fahrradsitz nach einem der vorangehenden Ansprüche, **dadurch gekennzeichnet, dass** die Trägerteile an ihrem vorderen Ende breiter als an ihrem hinteren Ende sind und dass die vordere Kante rund ist, indem das vordere Ende des Kissens rund ist.

7. Fahrradsitz nach einem der vorangehenden Ansprüche, **dadurch gekennzeichnet, dass** eine Schaumkunststoffschicht zwischen der obersten Schicht und dem Kissen angeordnet ist, wobei die obere Schicht aus einem gewebten Stoff besteht.

## Revendications

1. Selle de vélo comprenant deux parties de support séparées, chacune étant destinée à supporter l'un des os d'assise supérieurs du cycliste, les deux parties de support étant montées sur une barre de liaison, qui est agencée perpendiculairement à l'installation centrale du vélo, moyennant quoi chacune des parties de support est montée de manière réglable et fixe sur ladite barre, **caractérisée en ce que** les parties de support sont constituées d'au moins trois couches (6, 7, 8) qui sont fixées les unes aux autres au moyen des surfaces de rencontre, la plus basse (6) des couches n'étant pas flexible et montée sur la barre et la couche (7) placée sur ladite couche non flexible étant un coussin, qui est élastique dans toutes les directions et la couche la plus haute (8) étant rigide dans toutes les directions dans son plan, moyennant quoi l'épaisseur de la couche coussin (7) augmente dans la direction vers le bord avant de la partie de support et l'élasticité étant telle que la pression de surface provenant de l'os d'assise du cycliste causée par le déplacement vers le haut et vers le bas des jambes du cycliste est absorbée par la couche coussin sans que la couche coussin perde son élasticité.

2. Selle de vélo selon la revendication 1, **caractérisée en ce que** les deux parties de support peuvent être fixées sur la barre de montage (3) avec des distances mutuelles différentes.

3. Selle de vélo selon la revendication 1, **caractérisée en ce que** la couche supérieure est composée de cuir.

4. Selle de vélo selon la revendication 1, **caractérisée en ce que** la couche supérieure est formée à partir de tôle.

5. Selle de vélo selon la revendication 1, **caractérisée en ce que** le coussin formant la couche intermédiaire a une épaisseur d'au moins 10 mm et une dureté de 5 à 70 Shore A.

6. Selle de vélo selon l'une quelconque des revendications précédentes, **caractérisée en ce que** les parties de support sont plus larges au niveau de l'extrémité avant qu'au niveau de l'extrémité arrière et que le bord avant est arrondi du fait que l'extrémité avant du coussin est arrondie.

7. Selle de vélo selon l'une quelconque des revendications précédentes, **caractérisée en ce qu'**une couche en plastique mousse est agencée entre la couche la plus haute et le coussin, moyennant quoi la couche supérieure est constituée par un tissu tissé.
